# NEUE EUROPÄISCHE PATENTSCHRIFT

(11) **EP 2 668 464 B2**
(45) Veröffentlichungstag und Bekanntmachung des Hinweises auf die Entscheidung über den Einspruch: **03.03.2021**
(45) Hinweis auf die Patenterteilung: 02.09.2015
(21) Anmeldenummer: 11804644.0
(22) Anmeldetag: 10.12.2011
(51) Int. Cl.: G01B 5/00, G01B 11/24, B23Q 17/24

(54) **EINSTELL- UND/ODER MESSGERÄTEVORRICHTUNG**
SETTING AND/OR MEASUREMENT APPARATUS
DISPOSITIF DE RÉGLAGE ET/OU DE MESURE

(30) Priorität: 16.12.2010 DE 102010054742
(43) Veröffentlichungstag der Anmeldung: 04.12.2013
(73) Patentinhaber: E. Zoller GmbH & Co. KG Einstell- und Messgeräte, 74385 Pleidelsheim (DE)
(72) Erfinder: PFAU, Christian, 74379 Igersheim (DE)
(74) Vertreter: Daub, Thomas
(86) Internationale Anmeldenummer: PCT/EP2011/006236
(87) Internationale Veröffentlichungsnummer: WO 2012/079734

(56) Entgegenhaltungen:
- EP-A1- 1 574 817
- EP-A1- 1 574 817
- EP-A2- 2 224 204
- WO-A1-95/27184
- WO-A1-2006/063838
- WO-A2-03/009070
- DE-A1- 2 930 078
- DE-A1- 10 349 241
- DE-A1- 10 349 241
- DE-A1- 19 927 872
- DE-A1- 19 927 872
- DE-A1-102007 053 993
- DE-B- 1 027 886
- DE-B- 1 070 834
- DE-B- 1 120 707
- DE-B4-102004 058 655
- Vortragunterlagen zum Vortrag von Herrn Hage auf der Messe EMO in Hannover im 2005, bzgl. Mahr OKM Produkte und Applikationen, Mahr OKM GmbH
- P. Steinmüller 'Robotlader und optische Messeinrichtung auf der EMO Milano präsentiert' , 21.10.2009
- Anonymous: "Walter Maschinenbau unveils HCC device at EMO", , 15 December 2015 (2015-12-15),
- Anonym: "Schaufenster der Innovationen", , 16 December 2009 (2009-12-16),
- Multisensor-koordinaten-messtechnik, Inhalt, Seiten 6-7

## Beschreibung

### Stand der Technik

Die Erfindung betrifft eine Einstell- und/oder Messgerätevorrichtung nach dem Oberbegriff des Anspruchs 1. Eine solche Vorrichtung ist aus der DE 199 27 872 A1 bekannt.

### Vorteile der Erfindung

Die Erfindung betrifft eine Einstell- und/oder Messgerätevorrichtung gemäß Anspruch 1. Dadurch kann eine Einstell- und/oder Messgerätevorrichtung bereitgestellt werden, die eine Erfassung von spiralverzahnten Werkzeugen, wie beispielsweise Wälzfräswerkzeugen oder Gewindeschneidwerkzeugen, ermöglicht, wodurch ein Einstell- und/oder Messgerät bereitgestellt werden kann, mittels dessen unterschiedlichste Werkzeuge vorteilhaft vermessen werden können. Unter einer "Bilderfassungseinheit" soll dabei insbesondere eine Einheit zur elektronischen Erfassung optischer Daten verstanden werden, wie insbesondere eine Einheit mit einer Kamera, die dazu vorgesehen ist, ein Bild von wenigstens einem Teil des Werkzeugs in Form eines elektronisch weiterverarbeitbaren Datensatzes zu erstellen. Unter "einer optischen Achse" der Bilderfassungseinheit soll insbesondere eine Haupterfassungsrichtung der Kamera verstanden werden. Vorteilhafterweise umfasst die Bilderfassungseinheit ein Bildfeld, dessen Mittelpunkt die optische Achse festlegt. Unter "vorgesehen" soll insbesondere speziell programmiert, ausgestattet und/oder ausgelegt verstanden werden.

Unter einem "Linearverstellmechanismus" soll insbesondere ein Mechanismus für eine lineare Verstellung der Bilderfassungseinheit verstanden werden. Weiter soll unter "einer Abhängigkeit von dem Steigungswinkel" insbesondere verstanden werden, dass die Verfahrgeschwindigkeit, mit der die Bilderfassungseinheit entlang der Werkzeugrotationsachse verfahren wird, eine Abhängigkeit von dem Steigungswinkel der Schneide des Werkzeugs aufweist. Vorteilhafterweise ist dabei die Verfahrgeschwindigkeit umso größer, je größer der Steigungswinkel der Schneide ist. Unter einem "Steigungswinkel der Schneide" soll dabei insbesondere ein Winkel verstanden werden, den die Schneide mit einer Linie, die entlang einer Umfangsrichtung des Werkzeugs verläuft, einschließt, d.h. ein Winkel, der eine Steigung der Schneide bezüglich einer in Umfangsrichtung verlaufenden Linie aufweist. Unter "in Umfangsrichtung" sowie auch unter "axial" und "radial" soll dabei hier und im Folgenden, soweit nicht anders erwähnt, ein Bezug auf die Werkzeugrotationsachse verstanden werden.

Erfindungsgemäß ist die Nachführvorrichtung dazu vorgesehen, die Verfahrgeschwindigkeit entlang der Werkzeugrotationsachse in Abhängigkeit von einer Werkzeugrotationsgeschwindigkeit einzustellen. Dadurch kann die Erfassung des Werkzeugs besonders vorteilhaft an einen Verlauf einer Schneide des Werkzeugs angepasst werden, wodurch eine präzise Vermessung und damit auch Einstellung des Werkzeugs möglich ist. Unter einem "Verfahren in Abhängigkeit von der Werkzeugrotationsgeschwindigkeit" soll dabei insbesondere verstanden werden, dass die Verfahrgeschwindigkeit, mit der die Bilderfassungseinheit entlang der Werkzeugrotationsachse verfahren wird, zusätzlich eine Abhängigkeit von einer Winkelgeschwindigkeit der Werkzeugspindel aufweist. Vorteilhafterweise ist dabei die Verfahrgeschwindigkeit umso größer, je größer die Winkelgeschwindigkeit der Werkzeugspindel ist.

Ferner umfasst die Einstell- und/oder Messgerätevorrichtung eine Recheneinheit, die zur Ausbildung der Nachführvorrichtung vorgesehen ist. Dadurch kann die Nachführvorrichtung besonders einfach ausgebildet werden. Grundsätzlich ist es aber auch denkbar, dass die Nachführvorrichtung mechanisch oder teilmechanisch ausgebildet ist. Unter einer "Recheneinheit" soll insbesondere eine Einheit mit einem Prozessor und mit einer Speichereinheit sowie mit einem in der Speichereinheit gespeicherten Betriebsprogramm verstanden werden. Unter einer "elektronischen Steuerung und/oder Regelung" soll eine Steuerung und/oder Regelung mittels des Betriebsprogramms verstanden werden. Die Nachführvorrichtung ist dabei vorzugsweise mittels des Betriebsprogramms ausgebildet.

Erfindungsgemäß weist die Einstell- und/oder Messgerätevorrichtung eine Eingabeeinheit auf, die zur Eingabe eines Parameters für eine Bestimmung der Verfahrgeschwindigkeit vorgesehen ist. Dadurch kann ein Schwenkwinkel besonders einfach festgelegt werden. Unter einem "Parameter" soll dabei insbesondere ein Zahlenwert für eine weitere Verarbeitung mittels der Recheneinheit verstanden werden. Unter einem "Parameter für eine Bestimmung der Verfahrgeschwindigkeit" soll dabei ein Zahlenwert verstanden werden, der zur Berechnung und/oder Bestimmung der Verfahrgeschwindigkeit vorgesehen ist, wie insbesondere ein Zahlenwert, der direkt den Steigungswinkel und/oder eine Steigungshöhe festlegt. Grundsätzlich ist es aber auch denkbar, dass die Eingabeeinheit zur Eingabe mehrerer Parameter vorgesehen ist, aus denen die Verfahrgeschwindigkeit berechenbar ist. Unter einer "Steigungshöhe" soll dabei insbesondere ein axialer Abstand von zwei Schneidsegmenten der Schneide entlang einer Mantellinie des Werkzeugs verstanden werden.

Zudem wird vorgeschlagen, dass die Eingabeeinheit zur Eingabe des Parameters wenigstens ein Eingabefeld aufweist, das dazu vorgesehen ist, einen Werkzeugparameter abzufragen. Dadurch kann eine für einen Bediener intuitiv nachvollziehbare Eingabe für den Parameter erreicht werden, wodurch eine Fehlerwahrscheinlichkeit gesenkt werden kann. Unter einem "Werkzeugparameter" soll dabei insbesondere ein Parameter verstanden werden, der durch das Werkzeug definiert ist, wie insbesondere der Steigungswinkel der Schneide des Werkzeugs und/oder eine Steigungshöhe der Schneide des Werkzeugs. Unter einem "Eingabefeld zur Abfrage des Werkzeugparameters" soll insbesondere ein Feld verstanden werden, das auf einem Monitor anzeigbar ist und das vorzugsweise mit einer auf das Werkzeug bezogenen Beschriftung versehen ist. Besonders vorteilhaft dient das Eingabefeld zur Eingabe der Steigungshöhe, wodurch der Parameter, aus dem die Verfahrgeschwindigkeit bestimmt werden kann, besonders einfach erfasst wird.

Ferner wird vorgeschlagen, dass die Einstell- und/oder Messgerätevorrichtung einen Schwenkmechanismus aufweist, der dazu vorgesehen ist, die Bilderfassungseinheit um einen aus dem Parameter bestimmbaren Schwenkwinkel relativ zu der Werkzeugrotationsachse zu verschwenken. Dadurch kann die Bilderfassungseinheit das Werkzeug unter einem Winkel erfassen, der an den Steigungswinkel der Schneide angepasst ist, wodurch eine besonders genaue Vermessung des Werkzeugs möglich ist. Vorzugsweise ist der Schwenkwinkel gleich dem Steigungswinkel. Grundsätzlich ist es aber auch denkbar, dass der Schwenkwinkel von dem Steigungswinkel abweicht. Unter einem "Schwenkmechanismus" soll insbesondere ein Mechanismus verstanden werden, der für eine Bewegung, die zu einem Verkippen der optischen Achse um den Schwenkwinkel relativ zu der Werkzeugrotationsachse führt, vorgesehen ist. Vorzugweise weist der Schwenkmechanismus eine Schwenkachse auf, die unter einem schiefen Winkel zu der Werkzeugrotationsachse angeordnet ist, d.h. nicht parallel zu der Werkzeugrotationsachse verläuft. Vorzugsweise verläuft die Schwenkachse orthogonal zu der Werkzeugrotationsachse. In diesem Zusammenhang soll unter einem "Schwenkwinkel" insbesondere ein Winkel verstanden werden, den die optische Achse der Bilderfassungseinheit mit einer Richtung senkrecht zu der Werkzeugrotationsachse einschließt. Bei einem Schwenkwinkel von 0 Grad ist somit die optische Achse der Bilderfassungseinheit senkrecht zu der Rotationsachse orientiert. Vorteilhafterweise ist der für das Werkzeug vorgesehene Schwenkwinkel während einer Messung des Werkzeugs eingestellt.

Weiter ist es vorteilhaft, wenn die Eingabeeinheit wenigstens ein Eingabefeld aufweist, das dazu vorgesehen ist, den Schwenkwinkel abzufragen. Dadurch kann für den Schwenkwinkel ein von dem Steigungswinkel abweichender Wert festgelegt werden, wodurch eine Vermessung des Werkzeugs oder Werkzeugstücks besonders flexibel ausgestaltet werden kann.

Weiter wird vorgeschlagen, dass der Schwenkmechanismus eine Schwenkachse aufweist, die zumindest im Wesentlichen senkrecht zu der Werkzeugrotationsachse und/oder senkrecht zu der optischen Achse der Bilderfassungseinheit orientiert ist. Dadurch kann eine besonders vorteilhafte Ausbildung des Schwenkmechanismus erreicht werden. Unter "zumindest im Wesentlichen senkrecht" soll dabei eine Abweichung von höchstens 2,0 Grad, vorteilhafterweise von höchstens 1,0 Grad und besonders vorteilhaft von höchstens 0,1 Grad verstanden werden.

Weiter wird vorgeschlagen, dass der Schwenkmechanismus eine Antriebseinheit aufweist, die für eine elektronische Ansteuerung vorgesehen ist. Dadurch kann das Verstellen der Bilderfassungseinheit besonders einfach und besonders genau erfolgen. Unter einer "Antriebseinheit" soll in diesem Zusammenhang insbesondere eine Einheit mit wenigstens einem elektrischen Motor zur Verstellung der Schwenkachse verstanden werden. Grundsätzlich ist aber auch eine Einheit mit einem pneumatischen oder einem anderen, dem Fachmann als geeignet erscheinenden Motor denkbar.

Ferner ist es vorteilhaft, wenn der Linearverstellmechanismus eine Antriebseinheit aufweist, die für eine elektronische Ansteuerung vorgesehen ist. Dadurch kann auch der Linearverstellmechanismus einfach ausgebildet werden. Zudem ist dadurch einfach eine Ausbildung der Nachführvorrichtung mittels der Recheneinheit möglich, wobei vorteilhaft auf bereits bestehende Komponenten zurückgegriffen werden kann.

Weiter wird vorgeschlagen, dass die Einstell- und/oder Messgerätevorrichtung eine Fehlerkorrektureinheit aufweist, die dazu vorgesehen ist, eine Abweichung einer relativen Positionierung der Bilderfassungseinheit von einer Soll-Position zu kompensieren. Dadurch können Fehler beim Nachführen der Bilderfassungseinheit einfach ausgeglichen werden, wodurch eine besonders genaue Nachführung erreicht werden kann. Unter einer "Fehlerkorrektureinheit" soll dabei eine Einheit verstanden werden, die dazu vorgesehen ist, mechanische und/oder elektronische Effekte, die zu einer Abweichung zwischen einer Soll-Position der Bilderfassungseinheit und einer Ist-Position der Bilderfassungseinheit führen, auszugleichen. Unter einer "relativen Positionierung der Bilderfassungseinheit" soll dabei insbesondere eine Positionierung der Bilderfassungseinheit in Bezug auf das Werkzeug verstanden werden, wobei grundsätzlich das Werkzeug und/oder die Bilderfassungseinheit verfahrbar sein kann. Vorzugsweise ist die Fehlerkorrektureinheit elektronisch ausgebildet, d.h. die Abweichungen zwischen der Soll-Position der Bilderfassungseinheit und der Ist-Position der Bilderfassungseinheit werden softwaretechnisch korrigiert. Unter einer "Soll-Position der Bilderfassungseinheit" soll dabei insbesondere eine relative Positionierung der Bilderfassungseinheit verstanden werden, die sich rechnerisch aus der Abhängigkeit der Verfahrgeschwindigkeit von dem Steigungswinkel und der Werkzeugrotationsgeschwindigkeit ergibt. Unter einer "Ist-Position der Bilderfassungseinheit" soll insbesondere eine tatsächliche relative Positionierung der Bilderfassungseinheit verstanden werden, d.h. eine Position, die mittels eines Messgebers bestimmt wurde.

In einer Weiterbildung der Erfindung wird vorgeschlagen, dass die Einstell- und/oder Messgerätevorrichtung eine Konturverfolgungseinheit aufweist, die dazu vorgesehen ist, wenigstens zwei aufeinander folgende Messabschnitte zu synchronisieren. Dadurch kann eine Schneide vermessen werden, deren lokale Schneidkontur größer ist als ein Bildfeld der Bilderfassungseinheit, wodurch die Einstell- und/oder Messgerätevorrichtung besonders flexibel eingesetzt werden kann. Unter einer "Konturverfolgungseinheit" soll dabei insbesondere eine Einheit verstanden werden, die dazu vorgesehen ist, einen Konturverlauf aus dem Bildfeld der Bilderfassungseinheit zu extrahieren und selbstständig eine neue Position für die Bilderfassungseinheit zu bestimmen, in der ein an den bereits erfassten Konturverlauf anschließender Konturverlauf vermessen werden kann. Grundsätzlich kann der an den bereits erfassten Konturverlauf anschließende Konturverlauf aber auch vorgegeben werden, beispielsweise durch ein auf einer technischen Zeichnung, wie insbesondere einem CAD-Modell, basierendem Ablaufprogramm. Unter einem "Bildfeld der Bilderfassungseinheit" soll dabei insbesondere ein Bereich verstanden werden, der von der Kamera der Bilderfassungseinheit erfasst werden kann. Unter einer "lokalen Schneidkontur" soll insbesondere eine Kontur verstanden werden, die bei stehendem Werkzeug entlang einer Außenkontur des Werkzeugs mittels der Bilderfassungseinheit ermittelbar ist. Unter einem "Messabschnitt" soll insbesondere ein Teil einer Messung verstanden werden, bei dem die Bilderfassungseinheit und/oder das Werkzeug zur Erfassung eines Teils der Schneide mit einer stetigen Bewegung beaufschlagt wird.

Ferner umfasst die Bilderfassungseinheit zumindest eine Kamera und zumindest eine Beleuchtungseinheit, die entlang der optischen Achse gegenüberliegend angeordnet sind. Dadurch kann die Bilderfassungseinheit für ein Durchlichtverfahren vorgesehen werden, wodurch insbesondere spiralverzahnte Werkzeuge vorteilhaft vermessen werden können. Dabei ist es insbesondere auch denkbar, dass die Bilderfassungseinheit zusätzlich eine Beleuchtungseinheit aufweist, die auf einer gleichen Seite wie die Kamera angeordnet ist, wodurch die Bilderfassungseinheit zusätzlich für ein Auflichtverfahren vorgesehen werden kann. Prinzipiell ist es aber auch denkbar, dass die Bilderfassungseinheit lediglich für ein Auflichtverfahren vorgesehen ist.

Ferner kann ein Verfahren bereitgestellt werden, dass zum Vermessen in einem Einstell- und/oder Messgerät genutzt werden kann, um insbesondere ein spiralverzahntes Werkzeug mit dem Einstell- und/oder Messgerät vermessen zu können. Unter einem "spiralverzahnten Werkzeug" soll dabei insbesondere ein Werkzeug verstanden werden, das wenigstens eine Schneide aufweist, die entlang einer Spiralbahn an einem Außenumfang des Werkzeugs verläuft. Die Spiralbahn weist dabei vorzugsweise eine Helix-förmige Gestalt auf. Der Steigungswinkel und die Steigungshöhe der Schneide sind dabei insbesondere aus einer Steigung der Schneide bestimmbar. Unter einer "Steigung der Schneide" soll dabei insbesondere eine Steigung verstanden werden, die ein Punkt einer Linie, die durch Abwickeln der Schneide in eine Ebene definiert ist, aufweist. Vorzugsweise weist die wenigstens eine Schneide eine konstante Schneidsteigung auf, d.h., dass die Schneidsteigung in allen Punkten gleich ist und insbesondere, dass sich beim Abwickeln der Schneide in eine Ebene eine Gerade ergibt. Unter "Abwickeln" soll in diesem Zusammenhang insbesondere verstanden werden, dass die Schneide des Werkzeugs durch eine Rotation um die Werkzeugrotationsachse auf eine ebene Fläche abgebildet wird.

Ferner wird die Bilderfassungseinheit während der Drehbewegung mit einer von einer Werkzeugrotationsgeschwindigkeit abhängigen Verfahrgeschwindigkeit entlang der Werkzeugrotationsachse verfahren, um ein Bildfeld der Bilderfassungseinheit der Schneide des Werkzeugs nachzuführen. Dadurch kann das Werkzeug über einen Winkelbereich vorteilhaft erfasst und vermessen werden. Unter "Nachführen eines Bildfelds" soll in diesem Zusammenhang insbesondere verstanden werden, dass die Schneide des Werkzeugs stets in dem Bildfeld der Bilderfassungseinheit angeordnet ist, wobei vorzugsweise die Schneide stets in einem gleichen Bereich des Bildfelds, insbesondere in einem Zentralbereich des Bildfelds, angeordnet ist.

Besonders vorteilhaft wird eine optische Achse der Bilderfassungseinheit in Bezug auf die Werkzeugrotationsachse um einen von dem Steigungswinkel abhängigen Schwenkwinkel verkippt. Dadurch kann das Werkzeug besonders genau vermessen werden. Vorteilhafterweise wird dabei der Schwenkwinkel an den Steigungswinkel der Schneide angepasst.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Werkzeugmess- und Werkzeugeinstellgerät mit einer erfindungsgemäßen Einstell- und Messgerätevorrichtung und
- Fig. 2: ein in dem Werkzeugmess- und Werkzeugeinstellgerät vermessbares Werkzeug.

### Beschreibung der Ausführungsbeispiele

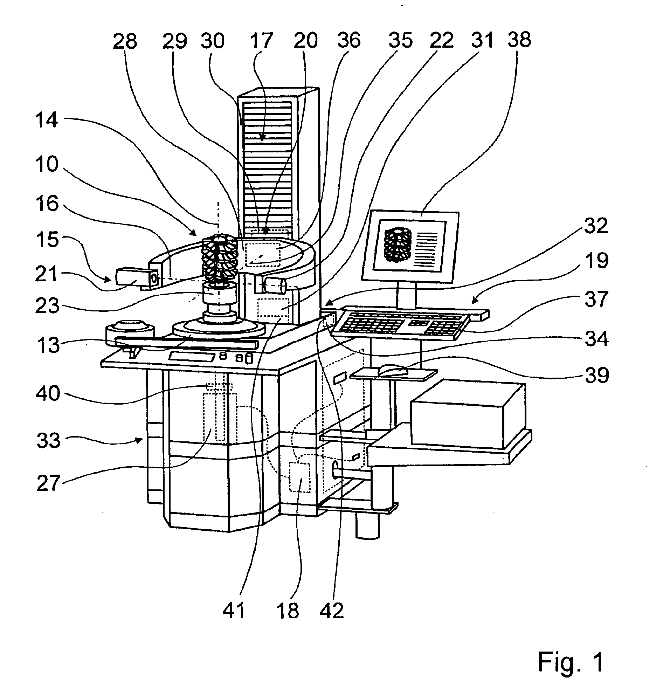

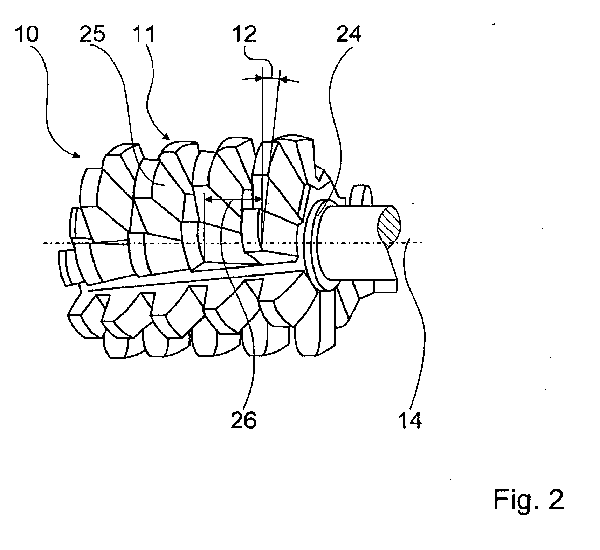

Die Figuren 1 und 2 zeigen ein Werkzeugmess- und Werkzeugeinstellgerät mit einer erfindungsgemäßen Einstell- und Messgerätevorrichtung. Die Einstell- und Messgerätevorrichtung umfasst eine Werkzeugspindel 13 mit einer Werkzeugaufnahme 23, die dazu vorgesehen ist, ein Werkzeug 10 aufzunehmen. Das Werkzeug 10 kann dabei mehrteilig ausgebildet sein und einen Werkzeugkörper und ein Werkzeugfutter, in das der Werkzeugkörper eingespannt ist, aufweisen. In dem dargestellten Ausführungsbeispiel ist auf ein separates Werkzeugfutter, das lösbar mit dem Werkzeugkörper verbunden ist, verzichtet.

Das in dem Ausführungsbeispiel beschriebene Werkzeug 10 ist als ein Wälzfräswerkzeug ausgebildet (vgl. Figur 2). Das Werkzeug 10 weist eine Werkzeugrotationsachse 14 auf, die entlang einer Haupterstreckungsrichtung des Werkzeugs 10 verläuft. Das Werkzeug 10 umfasst einen Werkzeuggrundköper 24 und eine Schneide 11 mit einer Mehrzahl von Schneidelementen 25, die an dem Werkzeuggrundkörper 24 angeordnet sind. Der Werkzeuggrundkörper 24 weist eine zylinderförmige Grundform auf. Die Schneidelemente 25 sind an einem Außenumfang des Werkzeuggrundkörpers 24 angeordnet. Grundsätzlich kann mittels der Einstell- und Messgerätevorrichtung aber auch ein Werkzeug 10 mit einer einzigen, schrägverzahnten Schneide vermessen werden.

Die Schneide 11 verläuft entlang einer Spiralbahn an dem Außenumfang des Werkzeuggrundkörpers 24. Die Schneide 11 weist einen Steigungswinkel 12 und eine Steigungshöhe 26 auf, die durch die Spiralbahn definiert ist. Die Schneidelemente 25 der Schneide 11 sind entlang der Spiralbahn hintereinander angeordnet. Die Schneide 11 des Werkzeugs ist in Schneidensegmente unterteilbar, die jeweils zumindest zwei Schneidelemente 25 aufweisen. Jedes der Schneidelemente 25 weist einen Beitrag zu einer Schneidkontur des entsprechenden Schneidensegments auf. Die Einstell- und Messgerätevorrichtung ist dazu vorgesehen, die Schneidensegmente der Schneide 11 einzeln zu vermessen und darzustellen.

Die Schneidelemente 25 weisen eine Schneidrichtung auf, die in Bezug auf den Werkzeuggrundkörper 24 in Umfangsrichtung gerichtet ist. Die Schneidelemente 25 des Werkzeugs 10 sind in der dargestellten Ausgestaltung unveränderbar. Grundsätzlich ist es aber auch denkbar, dass die Schneidelemente 25 verstellbar sind. Bei einem solchen Werkzeug umfasst beispielsweise jedes der Schneidelemente 25 eine Einstelleinheit, über die das entsprechende Schneidelement 25 individuell verstellt werden kann.

Das dargestellte Werkzeug 10 ist beispielsweise dazu vorgesehen, in ein Werkstück eine Zahnkontur einzubringen. Zum Einbringen der Zahnkontur werden das Werkzeug 10 und das nicht näher dargestellte Werkstück mit einer Drehbewegung angetrieben. Das Werkstück weist dabei eine Rotationsachse auf, die unter einem Winkel ungleich 0 Grad zu der Werkzeugrotationsachse 14 angeordnet ist. Das Werkzeug 10 wird mit einer Drehbewegung um seine Werkzeugrotationsachse 14 beaufschlagt. Zur Einbringung einer Geradverzahnung beispielsweise wird die Rotationsachse des Werkstücks unter einem Winkel von 90 Grad zu der Werkzeugrotationsachse 14 angeordnet.

Grundsätzlich können mittels der Einstell- und Messgerätevorrichtung beliebige spiralverzahnte Werkzeuge vermessen werden, die wenigstens eine Schneide aufweisen, die entlang einer Spiralbahn verläuft und die Schneidelemente aufweist, die entlang der Spiralbahn an einem Außendurchmesser angeordnet sind, wie beispielsweise auch ein Werkzeug, das als ein Gewindebohrer ausgebildet ist.

Zum Antrieb der Werkzeugspindel 13 umfasst die Einstell- und Messgerätevorrichtung eine Antriebseinheit 27. Die Antriebseinheit 27 ist mit der Werkzeugspindel 13 gekoppelt. Mittels der Antriebseinheit 27 sind die Werkzeugspindel 13 und die Werkzeugaufnahme 23 mit einer Drehbewegung beaufschlagbar. Eine Geschwindigkeit, die für die Werkzeugspindel 13 eingestellt ist, entspricht einer Werkzeugrotationsgeschwindigkeit. Eine Rotationsachse der Werkzeugspindel 13 verläuft koaxial zu der Werkzeugrotationsachse 14 des fest mit der Werkzeugaufnahme 23 verbundenen Werkzeugs 10. Die Antriebseinheit 27 ist elektronisch steuerbar.

Zum Vermessen und Einstellen des Werkzeugs 10 umfasst die Einstell- und Messgerätevorrichtung eine Bilderfassungseinheit 15 und eine Bildverarbeitungseinheit. Die Bilderfassungseinheit 15 umfasst eine Kamera 21 und eine Beleuchtungseinheit 22. Die Bilderfassungseinheit 15 weist eine optische Achse 16 auf, entlang der die Kamera 21 und die Beleuchtungseinheit 22 einander gegenüberliegend angeordnet sind. Die Kamera 21 und die Beleuchtungseinheit 22 sind für ein Durchlichtverfahren vorgesehen, d.h. während einem Messvorgang ist das Werkzeug 10 in einem Bereich zwischen der Kamera 21 und der Beleuchtungseinheit 22 angeordnet. Grundsätzlich kann die Bilderfassungseinheit 15 zusätzlich noch eine weitere Beleuchtungseinheit und/oder eine weitere Kameraeinheit aufweisen, die für ein Auflichtverfahren vorgesehen sind.

Die Bilderfassungseinheit 15 umfasst einen Optikträger 28, an dem die Kamera 21 und die Beleuchtungseinheit 22 angeordnet sind. Die Kamera 21 und die Beleuchtungseinheit 22 sind fest auf dem Optikträger 28 angeordnet. Der Optikträger 28 richtet damit die Kamera 21 und die Beleuchtungseinheit 22 definiert zueinander aus. Zur Anordnung des Optikträgers 28 umfasst die Einstell- und Messgerätevorrichtung einen Koordinatenschlitten 29 und einen Optikturm 30. Der Optikträger 28 ist über den Koordinatenschlitten 29 beweglich an dem Optikturm 30 angeordnet.

Zur linearen Verstellung der Bilderfassungseinheit 15 und des Werkzeugs 10 relativ zueinander in einer Richtung entlang der Werkzeugrotationsachse 14 weist die Einstell- und Messgerätevorrichtung einen Linearverstellmechanismus 17 auf. Durch den Linearverstellmechanismus 17 ist der Koordinatenschlitten 29 an dem Optikturm 30 entlang der Werkzeugrotationsachse 14 verfahrbar. Der Optikträger 28 ist bezüglich einer Linearbewegung entlang der Werkzeugrotationsachse 14 fest mit dem Koordinatenschlitten 29 verbunden. Der Linearverstellmechanismus 17 weist eine Antriebseinheit 31 auf, die elektronisch steuerbar ist. In dem dargestellten Ausführungsbeispiel ist der Linearverstellmechanismus 17 dazu vorgesehen, die Bilderfassungseinheit 15 zu verfahren. In äquivalenter Weise ist es aber auch denkbar, dass der Linearverstellmechanismus 17 dazu vorgesehen ist, das Werkzeug 10 zu verfahren, beispielsweise durch eine lineare Verstellung der Werkzeugspindel 13.

Zur linearen Verstellung der Bilderfassungseinheit 15 in einer Richtung senkrecht zu der Werkzeugrotationsachse 14 weist die Einstell- und Messgerätevorrichtung einen Linearverstellmechanismus 32 auf. Durch den Linearverstellmechanismus 32 ist der Optikturm 30 relativ zu einem Grundkörper 33 des Werkzeugmess- und Werkzeugeinstellgerät entlang einer Richtung senkrecht zu der Werkzeugrotationsachse 14 verfahrbar. Die Richtung, entlang der der Optikträger 28 damit verfahrbar ist, ist auch senkrecht zu der optischen Achse 16 der Bilderfassungseinheit 15 orientiert. Der Linearverstellmechanismus 32 weist eine Antriebseinheit 34 auf, die elektronisch steuerbar ist.

Grundsätzlich kann die Mess- und Einstellgerätevorrichtung noch einen dritten Linearverstellmechanismus zur Verstellung der Bilderfassungseinheit 15 in einer Richtung entlang der optischen Achse 16 aufweisen. Durch einen solchen Linearverstellmechanismus wäre der Optikträger zusätzlich entlang der optischen Achse 16 relativ zu dem Werkzeug 10 verstellbar. Ein solcher Linearverstellmechanismus weist vorteilhafterweise ebenfalls eine Antriebseinheit auf, die elektronisch steuerbar ist.

Der Optikträger 28 ist damit in zumindest zwei Richtungen linear verstellbar. Die zwei Richtungen definieren ein orthogonales Koordinatensystem, durch das der Optikträger 28 und damit die Bilderfassungseinheit 15 in einem Messraum beweglich sind. Durch die unterschiedlichen Antriebseinheiten 31, 34, die grundsätzlich auch teilweise einstückig ausgeführt sein können, ist die Bilderfassungseinheit 15 in die zumindest zwei Richtungen elektronisch verstellbar. Durch den dritten Linearverstellmechanismus kann die Bilderfassungseinheit 15 auch für eine elektronische Verstellung in drei Richtungen vorgesehen werden.

Zum Verkippen der optischen Achse 16 der Bilderfassungseinheit 15 in Bezug auf die Werkzeugrotationsachse 14 umfasst die Einstell- und Messgerätevorrichtung einen Schwenkmechanismus 20. Durch den Schwenkmechanismus 20 ist die Bilderfassungseinheit 15 gegenüber dem Koordinatenschlitten 29 verschwenkbar. Der Schwenkmechanismus 20 weist eine Schwenkachse 35 auf, die senkrecht zu der Werkzeugrotationsachse 14 und senkrecht zu der optischen Achse 16 der Bilderfassungseinheit 15 orientiert ist. Der Schwenkmechanismus 20 weist eine Antriebseinheit 36 auf, die elektronisch steuerbar ist.

Die Einstell- und Messgerätevorrichtung weist damit zumindest vier Messachsen auf, die jeweils einen Freiheitsgrad in einer Bewegung zwischen dem Werkzeug 10 und der Bilderfassungseinheit 15 ermöglichen. Zwei der Messachsen sind durch die Linearverstellungsmechanismen 17, 32 realisiert. Die zwei weiteren Messachsen sind durch den Schwenkmechanismus 20 zum Verschwenken der Bilderfassungseinheit 15 und die drehbare Werkzeugspindel 13 realisiert. Grundsätzlich kann die Einstell- und Messgerätevorrichtung auch fünf Messachsen aufweisen.

Zur Eingabe von Parametern, die für einen Messvorgang relevant sind, umfasst die Einstell- und Messgerätevorrichtung eine Eingabeeinheit 19. Die Eingabeeinheit 19 umfasst eine Tastatur 37 zur Eingabe von Ziffern und Buchstaben. Weiter umfasst die Eingabeeinheit 19 einen Bildschirm 38 zur Anzeige von Eingabefeldern. Der Bildschirm 38 kann als ein Touchscreen ausgeführt sein und bildet zugleich eine Anzeigeeinheit der Einstell- und Messgerätevorrichtung aus. Außerdem umfasst die Eingabeeinheit 19 ein Zeigegerät 39, das in Form einer Maus oder eines Trackballs ausgebildet sein kann. Grundsätzlich sind aber auch andere Ausgestaltungen der Eingabeeinheit 19 denkbar.
Um einen Messvorgang des Werkzeugs 10 zu steuern, weist die Einstell- und Messgerätevorrichtung eine Recheneinheit 18 auf. Die Recheneinheit 18 umfasst eine Prozessoreinheit und eine mit der Prozessoreinheit verbundene Speichereinheit, in der ein Steuerprogramm für die Einstell- und Messgerätevorrichtung hinterlegt ist. Die Recheneinheit 18 ist dabei insbesondere zur Steuerung der Antriebseinheiten 31, 34, 36 der Linearverstellmechanismen 17, 32 und des Schwenkmechanismus 20 sowie zur Steuerung der Antriebseinheit 27 der Werkzeugspindel 13 vorgesehen. Weiter ist die Recheneinheit 18 zur Steuerung der Bilderfassungseinheit 15 vorgesehen. Außerdem ist die Bildverarbeitungseinheit mittels der Recheneinheit 18 ausgebildet.

Um das Werkzeug 10, das als ein Wälzfräswerkzeug ausgebildet ist, vermessen zu können, umfasst die Einstell- und Messgerätevorrichtung eine Nachführvorrichtung, die dazu vorgesehen ist, die Bilderfassungseinheit 15 während einer Drehbewegung der Werkzeugspindel 13 mit einer Verfahrgeschwindigkeit, die von dem Steigungswinkel 12 des in die Werkzeugaufnahme 23 eingesetzten Werkzeugs 10 abhängt, entlang der Werkzeugrotationsachse 14 zu verfahren. Die Nachführvorrichtung ist dabei dazu vorgesehen, die Verfahrgeschwindigkeit für die Bilderfassungseinheit 15 in Abhängigkeit von der Werkzeugrotationsgeschwindigkeit einzustellen. Die Verfahrgeschwindigkeit hängt somit von dem Steigungswinkel 12 der Schneide und der Werkzeugrotationsgeschwindigkeit ab. Die Nachführvorrichtung ist dazu vorgesehen, ein Bildfeld der Bilderfassungseinheit 15 der Schneide 11 des Werkzeugs 10, deren axiale Position sich im Durchlichtverfahren aufgrund der Spiralbahn bei einer Drehbewegung des Werkzeugs 10 ändert, nachzuführen.

Die Eingabeeinheit 19 ist zur Eingabe eines Parameters für eine Bestimmung der Verfahrgeschwindigkeit vorgesehen. Die Eingabeeinheit 19 weist ein Eingabefeld auf, das für die Eingabe des Parameters vorgesehen ist und das in einem entsprechenden Mess- oder Einstellmodus auf dem Bildschirm 38 angezeigt wird. Das Eingabefeld ist dabei dazu vorgesehen, einen Werkzeugparameter des zu vermessenden Werkzeugs 10 abzufragen. In dem Eingabemodus ist die Eingabeeinheit 19 dazu vorgesehen, über das Eingabefeld als Werkzeugparameter den Steigungswinkel 12 der Spiralbahn, entlang der die Schneidelemente 25 an dem Werkzeug 10 angeordnet sind, direkt abzufragen. Ebenfalls ist es denkbar, dass die Eingabeeinheit 19 dazu vorgesehen ist, die Steigungshöhe 26 und einen Durchmesser der Spiralbahn abzufragen. Grundsätzlich sind aber andere Abfragen, wie beispielsweise eine Länge des Werkzeugs und eine Anzahl von Steigungen, aber auch eine direkte Abfrage eines Schwenkwinkels für die Bilderfassungseinheit 15, denkbar.

Der Schwenkwinkel, um den die Bilderfassungseinheit 15 während einer Messung des Werkzeugs 10 verschwenkt ist, ist an den Steigungswinkel 12 der Schneide 11 angepasst. Vorzugsweise ist der während der Messung eingestellte Schwenkwinkel gleich wie der Steigungswinkel 12. Grundsätzlich kann für die Bilderfassungseinheit 15 aber auch ein von dem Steigungswinkel 12 abweichender Schwenkwinkel eingestellt werden. Während einer Messung des Werkzeugs 10 schließt die optische Achse 16 der Bilderfassungseinheit 15 mit einer Richtung, die senkrecht zu der Werkzeugrotationsachse 14 orientiert ist, einen Winkel ungleich 0 Grad ein. Der Winkel, den die optische Achse 16 mit der Richtung einschließt, ist als der Schwenkwinkel definiert.

Zusätzlich zur Eingabe des Parameters durch die Eingabeeinheit ist die Einstell- und Messgerätevorrichtung auch zur automatischen Bestimmung des Schwenkwinkels vorgesehen. Dazu bestimmt die Recheneinheit 18 mittels der Bilderfassungseinheit 15 die Steigungshöhe 26 der Spiralbahn. Ferner ermittelt die Recheneinheit 18 mittels der Bilderfassungseinheit 15 eine aktuelle axiale Position der Schneide 11. Anschließend dreht sie das Werkzeug 10 um einen vorgegebenen oder vorgebbaren Drehwinkel und bestimmt erneut eine aktuelle Position der Schneide 11. Zudem ermittelt die Recheneinheit 18 mittels der Bilderfassungseinheit 15 eine radiale Position der Schneide 11. Anschließend ermittelt die Recheneinheit 18 aus den axialen Positionen der Schneide 11 und dem Drehwinkel die Steigungshöhe 26 der Schneide 11. Aus der radialen Position und der Steigungshöhe 26 ermittelt die Recheneinheit 18 anschließend den Steigungswinkel 12 der Schneide 11. Als Schwenkwinkel für die Bilderfassungseinheit 15 legt die Recheneinheit 18 dann den ermittelten Steigungswinkel 12 der Schneide fest.

Die Nachführvorrichtung ist mittels der Recheneinheit 18 ausgebildet. In der Speichereinheit der Recheneinheit 18 sind Bahnkurven für die Bilderfassungseinheit 15 hinterlegt. Die Bahnkurven definieren eine Position der Bilderfassungseinheit 15 in Bezug auf das Werkzeug 10. Die Position der Bilderfassungseinheit 15 ist dabei in Abhängigkeit von einer Winkellage, die das Werkzeug in Bezug auf eine Winkelnulllage aufweist, definiert.

Die Recheneinheit 18 ermittelt die Bahnkurven anhand des Parameters, der von dem Steigungswinkel 12 des Werkzeugs 10 abhängt. Die Bahnkurven weisen damit eine Abhängigkeit von dem Steigungswinkel 12 auf. Durch die Definition der Position der Bilderfassungseinheit 15 in Abhängigkeit von der Winkellage des Werkzeugs 10 weisen die Bahnkurven indirekt eine Abhängigkeit von der Werkzeugrotationsgeschwindigkeit auf. Die Verfahrgeschwindigkeit, mit der die Bilderfassungseinheit 15 bei einer Verstellung gemäß einer Bahnkurve verfahren wird, hängt somit von dem Steigungswinkel 12 und der Werkzeugrotationsgeschwindigkeit ab.

Zur Bestimmung der Winkellage und damit der Werkzeugrotationsgeschwindigkeit weist die Einstell- und Messgerätevorrichtung einen Drehgeber 40 auf, über den die Recheneinheit 18 eine Drehgeschwindigkeit und eine Winkellage der Werkzeugspindel 13 bestimmen kann. Der Drehgeber ist als ein Inkredimentalgeber ausgebildet, der eine Winkelauflösung feiner als 0,1 Grad aufweist. Mittels des Drehgebers 40 kann die Recheneinheit 18 stets die aktuelle, absolute Winkellage der Werkzeugspindel 13 und damit die aktuelle, absolute Winkellage des Werkzeugs 10 bestimmen. Die Einstell- und Messgerätevorrichtung umfasst weiter eine Messeinheit mit zumindest zwei Linearmessgebern 41, 42 zur Bestimmung einer aktuellen Position des Koordinatenschlittens 29. Die Linearmessgeber 41, 42 sind den zwei Linearverstellmechanismen 17, 32 zugeordnet. Mittels der Linearmessgeber 41, 42 kann die Recheneinheit 18 stets eine aktuelle Position des Koordinatenschlittens 29 und damit die aktuelle Position der Bilderfassungseinheit 15 bestimmen.

Weiter umfasst die Einstell- und Messgerätevorrichtung eine Fehlerkorrektureinheit. Die Fehlerkorrektureinheit ist dazu vorgesehen, eine Abweichung einer relativen Positionierung der Bilderfassungseinheit 15 von einer Soll-Position zu kompensieren. Die Nachführvorrichtung weist systembedingte Toleranzen auf, die durch die Fehlerkorrektureinheit ausgeglichen werden. Die Fehlerkorrektureinheit ist elektronisch mittels der Recheneinheit 18 ausgeführt.

Die Fehlerkorrektureinheit ist dazu vorgesehen, während einer Vermessung des Werkzeugs 10 anhand der Bahnkurven ständig die Soll-Position der Bilderfassungseinheit 15 zu bestimmen. Weiter ist die Fehlerkorrektureinheit dazu vorgesehen, mittels des Linearmessgebers 41, der dem Linearverstellmechanismus 17 zur Verstellung entlang der Werkzeugrotationsachse 14 zugeordnet ist, während der Vermessung des Werkzeugs 10 eine axiale Ist-Position der Bilderfassungseinheit 15 zu bestimmen. Aus der Soll-Position der Bilderfassungseinheit 15 und der Ist-Position der Bilderfassungseinheit 15 ist ein Fehlerparameter bestimmbar, der von der Fehlerkorrektureinheit ermittelt wird. Mittels des Fehlerparameters korrigiert die Fehlerkorrektureinheit ermittelte Messdaten softwaretechnisch um einen Fehlerkorrekturfaktor, der sich aus der Abweichung zwischen der Ist-Position der Bilderfassungseinheit 15 und der Soll-Position ergibt.

Weiter weist die Einstell- und Messgerätevorrichtung eine Konturverfolgungseinheit auf. Die Einstell- und Messgerätevorrichtung ist dazu vorgesehen, Werkzeuge 10 zu vermessen, die Schneidelemente 25 aufweisen, die größer sind als das Bildfeld der Bilderfassungseinheit 15. Die Konturverfolgungseinheit ist dabei dazu vorgesehen, aufeinander folgende Messabschnitte zu synchronisieren und die Messabschnitte so aufeinander abzustimmen, dass in mehreren Messabschnitten eine gesamte Schneidkontur der Schneide 11 erfassbar ist.

In dem beschrieben Ausführungsbeispiel bildet die Recheneinheit 18 die Nachführvorrichtung, die Fehlerkorrektureinheit und die Konturverfolgungseinheit aus. Insbesondere die Nachführvorrichtung und die Fehlerkorrektureinheit sind aber auch teilweise oder vollständig mechanisch ausbildbar. Die Nachführvorrichtung kann beispielsweise durch eine Getriebeeinheit ausgebildet werden, die wirkungsmäßig zwischen dem Linearverstellmechanismus 17 zur Verstellung entlang der Werkzeugrotationsachse 14 und der Werkzeugspindel 13 angeordnet ist. Die Abhängigkeit der Verfahrgeschwindigkeit der Bilderfassungseinheit 15 entlang der Werkzeugrotationsachse 14 von dem Steigungswinkel 12 kann dabei beispielsweise durch ein Kurvengetriebe oder ein anderes geeignetes Getriebe realisiert werden. Die Fehlerkorrektureinheit kann beispielsweise durch eine Regelung, die eine Abweichung zwischen Ist-Position und Soll-Position auf Null oder nahezu Null einregelt, ausgebildet werden und somit für einen mechanischen Ausgleich zwischen der Ist-Position und der Soll-Position vorgesehen werden.

Zum Vermessen wird das Werkzeug 10, das als Wälzfräswerkzeug ausgebildet ist, fest mit der Werkzeugspindel 13 verbunden. Die Recheneinheit 18 bestimmt aus dem Parameter den Schwenkwinkel für die Bilderfassungseinheit 15. Durch Ansteuerung der entsprechenden Antriebseinheit 36 verschwenkt die Recheneinheit 18 die Bilderfassungseinheit 15 um den bestimmten Schwenkwinkel.

Für manche Werkzeuge weist die Einstell- und Messgerätevorrichtung einen Betriebsmodus auf, in dem die Bilderfassungseinheit 15 ungeschwenkt bleibt. Die Recheneinheit 18 ist dazu vorgesehen, einen solchen Betriebsmodus anhand des eingesetzten Werkzeugs 10 selbstständig zu erkennen oder anhand eines über die Eingabeeinheit 19 festgelegten Auswahlelements den Betriebsmodus zu aktivieren. In einem solchen Betriebsmodus wird das Werkzeug 10 mit einer Ausrichtung der optischen Achse 16 der Bilderfassungseinheit 15 senkrecht zu der Werkzeugrotationsachse 14 vermessen.

Zur Initialisierung der Vermessung des Werkzeugs 10 verfährt die Recheneinheit 18 die Bilderfassungseinheit 15 in eine axiale Endlage. Die Messung kann dabei an einem Fuß des Werkzeugs 10 oder an einer Spitze des Werkzeugs 10 beginnen. Anschließend bestimmt die Recheneinheit 18 mittels der Bilderfassungseinheit 15 und der Bildverarbeitungseinheit die Winkelnulllage. Dazu beaufschlagt die Recheneinheit 18 das Werkzeug 10 mit einer Drehbewegung und bestimmt im Durchlichtverfahren eine Lage, in der das erste Schneidelement 25 der Schneide 11 des Werkzeugs 10 fokussiert ist. Die Winkellage, in der das Schneidelement fokussiert ist, wird als Winkelnulllage festgelegt. Über die Winkelnulllage ist ein werkzeugeigenes Koordinatensystem definierbar, das zur Angabe sämtlicher Messwerte genutzt werden kann. Grundsätzlich kann die Winkelnulllage auch vorgeben werden.

Sobald die Winkelnulllage bestimmt ist, wird der erste Messabschnitt eingeleitet. Zur Initialisierung der Messung wird zunächst ein Startpunkt für die Messung festgelegt. Der Startpunkt dient dabei gleichzeitig auch als ein Startpunkt für die Konturverfolgung. Der Startpunkt kann beispielsweise von dem Bediener eingegeben worden sein oder aus einem Messprogramm ausgelesen werden. Das Werkzeug 10 wird dann in eine Position gedreht, die vor dem Startpunkt für den entsprechenden Messabschnitt liegt. Anschließend wird das Werkzeug 10 mit einer stetigen Drehbewegung beaufschlagt, während die Nachführvorrichtung die Bilderfassungseinheit 15 mit einer stetigen axialen Verstellung beaufschlagt. Die Drehgeschwindigkeit, mit der das Werkzeug 10 dabei beaufschlagt wird, hängt von einem Radius, mit dem die Messung erfolgt, und einer geforderten Messgenauigkeit ab.
Während der Initialisierung pendelt sich zunächst eine Abweichung zwischen der angestrebten Soll-Position und der tatsächlichen Ist-Position der Bilderfassungseinheit 15 ein. Gleichzeitig beginnt die Fehlerkorrektureinheit, die Abweichung der Ist-Position der Bilderfassungseinheit 15 von der Soll-Position zu bestimmen. Mit Erreichen der Startposition sind die Nachführvorrichtung und die Fehlerkorrektureinheit initialisiert und der eigentliche Messablauf kann beginnen.

Während des Messabschnitts verfährt die Recheneinheit 18 die Bilderfassungseinheit 15 mittels des Linearverstellmechanismus 17 entlang der Werkzeugrotationsachse 14, während das Werkzeug 10 weiter mit der Drehbewegung beaufschlagt wird. Die Verfahrgeschwindigkeit, mit der die Recheneinheit 18 die Bilderfassungseinheit 15 verfährt, hängt dabei von dem Steigungswinkel 12 und der Drehgeschwindigkeit des Werkzeugs 10 ab. Die Verfahrgeschwindigkeit ist an die Spiralbahn der Schneide 11 angepasst. Durch die angepasste Verfahrgeschwindigkeit wird die Schneide 11 während der Messung im Bildfeld der Bilderfassungseinheit 15 gehalten.

Das Bildfeld der Bilderfassungseinheit 15 ist dabei kleiner als eine lokale Schneidkontur, die die Schneide des zu vermessenden Werkzeugs 10 maximal aufweisen darf. Nach dem ersten Messabschnitt, bei dem ein Teilbereich der Schneidkontur vermessen wurde, folgt ein zweiter Messabschnitt. Zur Synchronisation der Messabschnitte bestimmt die Konturverfolgungseinheit in einem definierten Bildfeld, beispielsweise in dem Bildfeld, das zur Bestimmung der Winkelnulllage genutzt wurde, einen Konturverlauf der Schneidekontur. Ausgehend von dem bestimmten Konturverlauf bestimmt die Konturverfolgungseinheit dann eine neue Bahnkurve, die für den nächsten Messabschnitt verwendet wird. Die Bahnkurve des zweiten Messabschnitts weist dabei gegenüber der Bahnkurve des ersten Messabschnitts einen radialen und/oder einen axialen Offset auf.

Der Messabschnitt kann sich dabei ausgehend von der Winkelnulllage über die gesamte Schneide 11 des Werkzeugs 10 oder nur über einen Teilbereich, beispielsweise einzelne Schneidsegmente, erstrecken. Zur Erfassung der gesamten Schneide 11 vermisst die Recheneinheit 18 sukzessive die einzelnen Schneidsegmente der Schneide 11 und bestimmt deren Schneidkontur. Die Schneidkontur der einzelnen Schneidsegmente wird anschließend auf der Anzeigeeinheit angezeigt und/oder als ein Datensatz in der Speichereinheit der Recheneinheit 18 abgelegt.
Die einzelnen Schneidsegmente werden dabei, je nach Größer der Schneide 11, jeweils mittels eines Messabschnitts oder mehrerer Messabschnitte bestimmt. Sobald ein Schneidsegment vollständig vermessen ist, wird eine Vermessung des nachfolgenden Schneidsegments durchgeführt. Grundsätzlich ist es aber auch denkbar, zunächst in einem Messabschnitt mehrere zu vermessenden Schneidsegmente abzufahren und anschließend mittels der Konturverfolgungseinheit einen nächsten Messabschnitt festzulegen, in dem wiederum mehrere Schneidsegmente vermessen werden. Vorzugsweise erfasst die Recheneinheit 18 mittels der Bilderfassungseinheit 15 die gesamte Schneide 11 des Werkzeugs 10.

**Bezugszeichen**

| | | | |
|---|---|---|---|
| 10 | Werkzeug | 33 | Grundkörper |
| 11 | Schneide | 34 | Antriebseinheit |
| 12 | Steigungswinkel | 35 | Schwenkachse |
| 13 | Werkzeugspindel | 36 | Antriebseinheit |
| 14 | Werkzeugrotationsachse | 37 | Tastatur |
| 15 | Bilderfassungseinheit | 38 | Bildschirm |
| 16 | optische Achse | 39 | Zeigegerät |
| 17 | Linearverstellmechanismus | 40 | Drehgeber |
| 18 | Recheneinheit | 41 | Linearmessgeber |
| 19 | Eingabeeinheit | 42 | Linearmessgeber |
| 20 | Schwenkmechanismus | | |
| 21 | Kamera | | |
| 22 | Beleuchtungseinheit | | |
| 23 | Werkzeugaufnahme | | |
| 24 | Werkzeuggrundköper | | |
| 25 | Schneidelemente | | |
| 26 | Steigungshöhe | | |
| 27 | Antriebseinheit | | |
| 28 | Optikträger | | |
| 29 | Koordinatenschlitten | | |
| 30 | Optikturm | | |
| 31 | Antriebseinheit | | |
| 32 | Linearverstellmechanismus | | |

## Patentansprüche

1. Einstell- und/oder Messgerätevorrichtung zum Einstellen und/oder Vermessen eines Werkzeugs (10), das wenigstens eine Schneide (11) mit einem Steigungswinkel (12) aufweist, mit einer Werkzeugspindel (13), die um eine Werkzeugrotationsachse (14) drehbar ist, mit einer Bilderfassungseinheit (15), die wenigstens eine optische Achse (16) aufweist, entlang der das Werkzeug (10) erfassbar ist, mit einem Linearverstellmechanismus (17), der dazu vorgesehen ist, wenigstens einen Teil der Bilderfassungseinheit (15) und das Werkzeug (10) wenigstens im Wesentlichen parallel zu der Werkzeugrotationsachse (14) relativ zueinander zu verfahren, mit
einer Nachführvorrichtung, die dazu vorgesehen ist, die Bilderfassungseinheit (15) während einer Drehbewegung der Werkzeugspindel (13) mit einer Verfahrgeschwindigkeit, die zumindest von dem Steigungswinkel (12) abhängt, wenigstens entlang der Werkzeugrotationsachse (14) zu verfahren, und mit einer Eingabeeinheit (19), die zur Eingabe eines Parameters für die Bestimmung der Verfahrgeschwindigkeit vorgesehen ist, wobei die Nachführvorrichtung dazu vorgesehen ist, die Verfahrgeschwindigkeit entlang der Werkzeugrotationsachse (14) in Abhängigkeit von einer Werkzeugrotationsgeschwindigkeit einzustellen,
**gekennzeichnet durch**
- einen Schwenkmechanismus (20), der dazu vorgesehen ist, die Bilderfassungseinheit (15) um einen aus dem Parameter bestimmbaren Schwenkwinkel relativ zu der Werkzeugrotationsachse (14) zu verschwenken,
- wobei die Bilderfassungseinheit (15) eine Kamera (21) und eine Beleuchtungseinheit (22) umfasst,
wobei die Kamera (21) und die Beleuchtungseinheit (22) entlang der optischen Achse (16) einander gegenüberliegend angeordnet sind,
und wobei die Kamera (21) und die Beleuchtungseinheit (22) für ein Durchlichtverfahren vorgesehen sind,
- wobei der Schwenkmechanismus (20) eine Antriebseinheit (36) aufweist, die elektronisch steuerbar ist,
- und durch eine Recheneinheit (18), die zur Ausbildung der Nachführvorrichtung vorgesehen ist,
- wobei die Recheneinheit (18) dazu vorgesehen ist, aus dem Parameter den Schwenkwinkel für die Bilderfassungseinheit (15) zu bestimmen,
und wobei die Recheneinheit (18) dazu vorgesehen ist, durch Ansteuerung der entsprechenden Antriebseinheit (36) die Bilderfassungseinheit (15) um den bestimmten Schwenkwinkel zu verschwenken.

2. Einstell- und/oder Messgerätevorrichtung nach Anspruch 1,
**dadurch gekennzeichnet, dass**
die Eingabeeinheit (19) wenigstens ein Eingabefeld zur Eingabe des Parameters aufweist, das dazu vorgesehen ist, einen Werkzeugparameter abzufragen.

3. Einstell- und/oder Messgerätevorrichtung nach Anspruch 1,
**dadurch gekennzeichnet, dass**
der Schwenkmechanismus (20) eine Schwenkachse (35) aufweist, die zumindest im Wesentlichen senkrecht zu der Werkzeugrotationsachse (14) und/oder senkrecht zu der optischen Achse (16) der Bilderfassungseinheit (15) orientiert ist.

4. Einstell- und/oder Messgerätevorrichtung nach einem der vorhergehenden Ansprüche,
**gekennzeichnet durch**
eine Fehlerkorrektureinheit, die dazu vorgesehen ist, eine Abweichung einer relativen Positionierung der Bilderfassungseinheit (15) von einer Soll-Position zu kompensieren.

5. Einstell- und/oder Messgerätevorrichtung nach einem der vorhergehenden Ansprüche,
**gekennzeichnet durch**
eine Konturverfolgungseinheit, die dazu vorgesehen ist, wenigstens zwei aufeinander folgende Messabschnitte zu synchronisieren.

6. Verfahren zum Vermessen und/oder Einstellen eines Werkzeugs (10), das wenigstens eine Schneide (11) mit einem Steigungswinkel (12) aufweist, in einer Einstell- und/oder Messgerätevorrichtung nach einem der vorhergehenden Ansprüche, wobei
das Werkzeug (10) mit einer Drehbewegung um eine Werkzeugrotationsachse (14) beaufschlagt wird und eine Bilderfassungseinheit (15) während der Drehbewegung mit einer Verfahrgeschwindigkeit, die zumindest von dem Steigungswinkel (12) abhängt, wenigstens entlang der Werkzeugrotationsachse (14) verfahren wird, wobei die Bilderfassungseinheit (15) während der Drehbewegung mit einer von einer Werkzeugrotationsgeschwindigkeit abhängigen Verfahrgeschwindigkeit entlang der Werkzeugrotationsachse (14) verfahren wird, um ein Bildfeld der Bilderfassungseinheit (15) der Schneide (11) des Werkzeugs (10) nachzuführen,
**dadurch gekennzeichnet, dass**
- eine optische Achse (16) der Bilderfassungseinheit (15) in Bezug auf die Werkzeugrotationsachse (14) um einen von dem Steigungswinkel (12) abhängigen Schwenkwinkel verkippt wird,
- wobei die Bilderfassungseinheit (15) eine Kamera (21) und eine Beleuchtungseinheit (22) umfasst,
wobei die Kamera (21) und die Beleuchtungseinheit (22) entlang der optischen Achse (16) einander gegenüberliegend angeordnet werden,
und wobei die Kamera (21) und die Beleuchtungseinheit (22) ein Durchlichtverfahren durchführen,
- dass der Schwenkwinkel für die Bilderfassungseinheit (15) mittels einer Recheneinheit (18) der Einstell- und/oder Messgerätevorrichtung aus einem Parameter bestimmt wird,
- wobei die Recheneinheit (18) eine Nachführvorrichtung ausbildet,
- und dass durch Ansteuerung einer entsprechenden Antriebseinheit (36) eines Schwenkmechanismus (20) der Einstell- und/oder Messgerätevorrichtung mittels der Recheneinheit (18) die Bilderfassungseinheit (18) um den bestimmten Schwenkwinkel verschwenkt wird,
- wobei die Antriebseinheit (36) elektronisch gesteuert wird.

## Claims

1. Setting and/or measurement apparatus for setting and/or measuring a tool (10) that comprises at least one cutting edge (11) with a inclination angle (12) having a tool spindle (13) which is rotatable around a tool rotational axis (14), with an image capturing unit (15) that comprises at least one optical axis (16), along which the tool (10) is capturable, with a linear adjustment mechanism (17) that is provided to traverse relatively to each other at least one part of the image capturing unit (15) and the tool (10) at least substantially parallel to the rotary tool axis (14), with a subsequent tracking device, which is provided to traverse the image capturing unit (15) during a rotational movement of the tool spindle (13) with a traversing speed which depends at least from the inclination angle (12), at least along the tool rotational axis (14), and with an input unit (19), which is provided for the input of a parameter for determining the traversing speed, wherein the subsequent tracking device is provided to set the traversing speed along the tool rotational axis (14) in dependence of a tool rotational speed,
**characterized by**
- a pivoting mechanism (20), which is provided to pivot the image capturing unit (15) by a pivoting angle determinable from the parameter, relatively to the tool rotational axis (14),
- wherein the image capturing unit (15) comprises a camera (21) and a lighting unit (22),
wherein the camera (21) and the lighting unit (22) are arranged opposite each other along the optical axis (16)
and wherein the camera (21) and the lighting unit (22) are provided for a transmitted-light procedure,
- wherein the pivoting mechanism (20) comprises a drive unit (36), which is controllable electronically,
- and by a computing unit (18), which is provided for the formation of the subsequent tracking device,
- wherein the computing unit (18) is provided to determine the pivoting angle for the image capturing unit (15) on the basis of the parameter
and wherein the computing unit (18) is provided to pivot the image capturing unit (15) by the determined pivoting angle by an actuation of the corresponding drive unit (36).

2. Setting- and/or measurement apparatus according to claim 1,
**characterized in that**
the input unit (19) comprises at least one input field for the input of the parameter, which is provided for retrieving a tool parameter.

3. Setting and/or measurement apparatus according to claim1,
**characterized in that**
the pivoting mechanism (20) comprises a pivoting axis (35), which is oriented at least substantially perpendicularly to the tool rotational axis (14) and/or perpendicularly to the optical axis (16) of the image capturing unit (15).

4. Setting and/or measurement apparatus according to one of the preceding claims,
**characterized by**
an error correction unit, which is provided to compensate a deviation of a relative positioning of the image capturing unit (15) from a desired position.

5. Setting and/or measurement apparatus according to one of the preceding claims,
**characterized by**
a contour tracking unit, which is provided to synchronize at least two consecutive measuring sections.

6. Method for measuring and/or setting a tool (10) that comprises at least one cutting edge (11) with a inclination angle (12) in a setting and/or measuring apparatus according to one of the preceding claims, wherein
the tool (10) is charged with a rotational movement around a tool rotational axis (14) and that, during a rotational movement, an image capturing unit (15) is traversed with a traversing speed which depends at least from the inclination angle (12), at least along the tool rotational axis (14), wherein an image capturing unit (15) is traversed during the rotational movement with a traversing speed which depends from a tool rotational speed, along the tool rotational axis (14) in order to subsequently track an image field of the image capturing unit (15) of the cutting edge (11) of the tool (10),
**characterized in that**
- an optical axis (16) of the image capturing unit (15) is tilted by a pivoting angle that depends from the inclination angle (12),
- wherein the image capturing unit (15) comprises a camera (21) and a lighting unit (22),
wherein the camera (21) and the lighting unit (22) are arranged opposite each other along the optical axis (16)
and wherein the camera (21) and the lighting unit (22) execute a transmitted-light procedure,
- that the pivoting angle for the image capturing unit (15) is determined on the basis of a parameter by a computing unit (18) of the setting and/or measurement apparatus,
- wherein the computing unit (18) forms a subsequent tracking device,
- and that the image capturing unit (15) is pivoted by the determined pivoting angle via an actuation of a corresponding drive unit (36) of a pivoting mechanism (20) of the setting and/or measurement apparatus by the computing unit (18),
- wherein the drive unit (36) is controlled electronically.

## Revendications

1. Dispositif de réglage et/ou de mesure pour régler et/ou mesurer un outil (10), lequel comprends au moins une lame (11) avec un angle d'inclinaison (12), avec un arbre d'outil (13) rotable autour d'un axe rotatif d'outil (14), avec une unité de captage d'image (15) comprenant au moins un axe optique (16) le long duquel l'outil est captable, avec un mécanisme de réglage linéaire (17), lequel est prévu à déplacer au moins une part de l'unité de captage d'image (15) et l'outil l'un relatif à l'autre au moins substantiellement en parallèle, avec
un dispositif de poursuite prévu à déplacer l'unité de captage d'image (15) pendant un mouvement rotatif de l'arbre d'outil (13) au moins le long de l'axe rotatif d'outil (14) avec une vitesse de déplacement dépendante au moins de l'angle d'inclinaison (12), et avec une unité d'entrée (19) prévue à entrer un paramètre pour la détermination de la vitesse de déplacement, le dispositif de poursuite étant prévu à régler la vitesse de déplacement le long de l'axe rotatif d'outil (14) dépendant d'une vitesse rotatif de l'outil,
**caractérisé par**
- un mécanisme pivotant (20) prévu à pivoter l'unité de captage d'image (15), relativement à l'axe rotatif d'outil (14), par un angle pivotant déterminable à base du paramètre,
- où l'unité de captage d'image (15) comprend une caméra (21) et une unité d'illumination (22),
où la caméra (21) et l'unité d'illumination (22) sont disposées le long de l'axe optique (16), l'une opposée à l'autre,
et où la caméra (21) et l'unité d'illumination (22) sont prévues pour un procédé en lumière transmise,
- le mécanisme pivotant (20) comprenant une unité d'entraînement (36) qui peut être commandée électroniquement,
- et par une unité arithmétique et logique (18) prévue à implémenter le dispositif de poursuite,
- l'unité arithmétique et logique (18) étant prévue à déterminer à base du paramètre l'angle pivotant pour l'unité de captage d'image (15),
et l'unité arithmétique et logique (18) étant prévue à pivoter l'unité de captage d'image (15) par l'angle pivotant déterminé au moyen d'un actionnement de l'unité d'entraînement (36) correspondante.

2. Dispositif de réglage et/ou de mesure selon la revendication 1,
**caractérisé en ce que**
l'unité d'entrée (19) présente au moins un champ de saisie pour entrer le paramètre, lequel champ de saisie étant prévu à extraire un paramètre d'outil.

3. Dispositif de réglage et/ou de mesure selon la revendication 1,
**caractérisé en ce que**
le mécanisme pivotant (20) présente un axe pivotant (35) orienté au moins substantiellement perpendiculaire à l'axe rotatif d'outil (14) et/ou perpendiculaire à l'axe optique (16) de l'unité de captage d'image.

4. Dispositif de réglage et/ou de mesure selon l'une quelconque des revendications précédentes,
**caractérisé par**
une unité de correction d'erreurs, laquelle est prévue à compenser une déviation d'un positionnement relatif de l'unité de captage d'image (15) d'une position nominale.

5. Dispositif de réglage et/ou de mesure selon l'une quelconque des revendications précédentes,
**caractérisé par**
une unité de poursuite de contour, laquelle est prévue à synchroniser au moins deux segments de mesure subséquents.

6. Procédé pour mesurer et/ou régler un outil (10), lequel présente au moins une lame (11) avec un angle d'inclinaison (12), dans un dispositif de réglage et/ou de mesure selon l'une quelconque des revendications précédentes, où l'outil (10) est alimenté d'un mouvement rotatif autour d'un axe rotatif d'outil (14) et une unité de captage d'image (15) est déplacée, pendant le mouvement rotatif, au moins le long de l'axe rotatif d'outil (14), avec une vitesse de déplacement dépendante au moins de l'angle d'inclinaison (12),
l'unité de captage d'image (15) étant déplacée, pendant le mouvement rotatif, le long de l'axe rotatif d'outil (14) avec une vitesse de déplacement dépendante au moins de l'angle d'inclinaison (12) pour poursuivre un champ d'image de l'unité de captage d'image (15) de la lame (11) de l'outil (10),
**caractérisé en ce que**
- un axe optique (16) de l'unité de captage d'image (15) est incliné par un angle pivotant dépendant de l'angle d'inclinaison (12) relativement à l'axe rotatif d'outil (14),
- où l'unité de captage d'image (15) comprend une caméra (21) et une unité d'illumination (22),
où la caméra (21) et l'unité d'illumination (22) sont disposées le long de l'axe optique (16), l'une opposée à l'autre,
et où la caméra (21) et l'unité d'illumination (22) exécutent un procédé en lumière transmise,
- que l'angle pivotant pour l'unité de captage d'image (15) est déterminé à base d'un paramètre par le biais d'une unité arithmétique et logique (18) du dispositif de réglage et/ou de mesure,
- l'unité arithmétique et logique (18) implémentant un dispositif de poursuite,
- et que l'unité de captage d'image (15) est pivotée par l'angle pivotant déterminé au moyen d'un actionnement par l'unité arithmétique et logique (18) d'une unité d'entraînement (36) correspondante d'un mécanisme pivotant (20) du dispositif de réglage et/ou de mesure,
- l'unité d'entraînement (36) étant commandée électroniquement.
